# DEMANDE DE BREVET EUROPEEN

(11) **EP 4 353 075 A1**
(43) Date de publication de la demande: **17.04.2024**
(21) Numéro de dépôt: 23203234.2
(22) Date de dépôt: 12.10.2023
(51) Int. Cl.: A01G 2/38, A01G 13/02, A01G 17/02

(54) **DISPOSITIF DE PROTECTION**

(30) Priorité: 13.10.2022 FR 2210552
(71) Demandeur: WINEPROTECT, 33290 Ludon-Médoc (FR)
(72) Inventeur: DUCAMP, Deborah, 33290 LUDON MEDOC (FR); ALAME, Morgan, 33160 SAINT MEDARD EN JALLES (FR)
(74) Mandataire: Aquinov

(57) **Abrégé**

L'invention porte sur un dispositif de protection (1) d'un cep de vigne comportant une cloche (1) ouverte sur une face (13) délimitée par un bord inférieur (10.1, 11.1) de la cloche (1) et présentant une forme s'évasant globalement vers ce bord inférieur (10.1, 11.1), la cloche (1) comportant deux encoches (11.2) ménagées dans ledit bord inférieur (10.1, 11.1), les encoches (11.2) se faisant face en étant adaptées pour recevoir une aste du cep de vigne.

## Description

### Domaine technique.

L'invention se rapporte au domaine technique des dispositifs de protection et notamment des dispositifs de protection des arbres et arbustes fruitiers.

### Etat de la technique.

Le réchauffement climatique est de plus en plus ressenti ces dernières années et notamment dans le secteur agricole dans lequel ces changements de saisonnalités sont le plus ressentis. En effet le changement de saisonnalité entraine des dérèglements des températures, les gelées peuvent être plus tardives, les chaleurs plus précoces, entrainant des dérèglements de la nature. Par exemple, il est de plus en plus courant de voir apparaitre des chaleurs précoces entrainant la montée de sève dans les plantes et donc l'apparition des bourgeons de manière précoce. De plus, il est également de plus en plus courant de voir apparaitre des gelées tardives entrainant le gel des bourgeons voire des premiers fruits du fait de la floraison précoce.

Lors des épisodes de gelées, la rosée qui se forme pendant la nuit gèle et forme une couche de glace recouvrant le bourgeon ou le fruit en formation. Au petit matin, la mince couche de glace formée fait effet de loupe lorsque les premiers rayons du soleil l'atteignent. Ces rayons ayant tendance à être fortement concentrés, ils traversent la glace et entrainent la destruction du bourgeon ou du fruit. La plupart du temps, cette destruction résulte de la combinaison des rayons lumineux concentrés, le la couche de rosée transformée en glace, de la température au sol et de la présence de vent.

Il est donc connu dans le milieu agricole et notamment dans le milieu viticole au moment des gelées, d'utiliser une pluralité de moyens pour protéger les bourgeons des gelées. Parmi ces moyens, on peut notamment retrouver des bâches de protection, des hélices, l'utilisation de torches ou de ballots de paille enflammés mais ceux-ci présentent tous des inconvénients. Les bâches de protections sont très coûteuses notamment dans des exploitations comportant plusieurs hectares de plantes à protéger, les hélices ne sont que brasser l'air et permettent d'augmenter légèrement la température au sol mais celles-ci ne permettent pas de protéger des rayons du soleil sur la fine couche de glace, notamment en cas de très fortes gelées, les torches ou ballots de pailles nécessitent une présence de l'exploitant sur toute la durée de la nuit afin que les feux ne s'éteignent pas et soient allumés sur la pluralité d'hectares de l'exploitation, de plus ces feux nocturnes sont souvent mal vus par la population aux alentours notamment vis-à-vis des fumées dégagées.

L'invention se place donc dans ce contexte et cherche à résoudre l'ensemble des inconvénients précités. Ainsi, l'invention cherche à proposer un dispositif permettant la protection des bourgeons et/ou des fruits vis-à-vis de la formation des rayons lumineux du soleil levant, du vent et de la transformation de la rosée en fine couche de glace. Présentation de l'invention.

L'invention a pour objet un dispositif de protection d'un cep de vigne comportant une cloche ouverte sur une face délimitée par un bord inférieur de la cloche et présentant une forme s'évasant globalement vers ce bord inférieur, la cloche comportant deux encoches ménagées dans ledit bord inférieur, les encoches se faisant face en étant adaptées pour recevoir une aste du cep de vigne.

Le dispositif de protection peut être adapté pour la protection d'un cep de vigne. Le dispositif peut être adapté pour la protection d'une branche ou d'une portion de branche d'un arbre ou d'un arbuste fruitier. Le dispositif peut permettre la protection de bourgeons. Le dispositif peut permettre la protection de fruits en cours de formation.

La forme de la cloche s'évasant vers son bord inférieur peut permettre de former un volume ouvert donc la face ouverte peut être définie par le bord inférieur de ladite cloche. Dans ce volume ouvert il peut ainsi être possible d'y insérer le ou les bourgeons de sorte qu'ils soient protégés de la transformation de rosée en gelée ainsi que des rayons du soleil levant. Dans un autre mode de réalisation, le volume ouvert peut être adapté pour recevoir au moins une partie du cep de vigne de manière à pouvoir protéger les bourgeons dudit cep.

La cloche peut permettre de maintenir la chaleur dans le volume ouvert. La cloche peut également permettre d'obtenir un effet coupe-vent.

Les encoches ménagées dans le bord inférieur de la cloche peuvent permettre de faciliter le positionnement de la cloche sur le cep de vigne.

Avantageusement, la cloche comporte deux parois longitudinales reliées entre elles par deux parois latérales et une paroi supérieure, la cloche étant ouverte au niveau de sa face inférieure, chacune des parois latérales et de la paroi supérieure relie deux bords opposés des parois longitudinales en s'étendant sur tout le long de chacun de ces bords ; les parois latérales sont agencées de sorte que les parois longitudinales soient inclinées l'une par rapport à l'autre en convergeant vers la paroi supérieure ; chaque paroi latérale comporte une encoche ménagée dans son bord inférieur, ladite encoche étant adaptée pour recevoir une aste du cep de vigne.

Dans un mode de réalisation la paroi supérieure peut être convexe, de sorte que chaque paroi longitudinale s'étend de façon continue avec la paroi supérieure.

Dans un mode de réalisation, les deux parois longitudinales peuvent être reliées entre elles par les deux parois latérales reliant deux bords opposés des parois longitudinales. Lesdites parois longitudinales et lesdites parois latérales peuvent former le volume dont la face inférieure est ouverte et définie par le bord inférieur.

Dans un mode de réalisation, les deux parois longitudinales peuvent être reliées entre elles par la paroi supérieure reliant deux bords opposés des parois longitudinales.

Dans un autre mode de réalisation, les deux parois longitudinales peuvent être reliées entre elles par deux bords opposés desdites parois longitudinales formant une jonction, ladite jonction pouvant dans ce mode de réalisation former la paroi supérieure.

Les deux parois latérales peuvent relier deux bords opposés des parois longitudinales en s'étendant sur tout le long de chacun de ces bords. Ainsi chaque paroi latérale peut être insérée entre deux parois longitudinales. Chaque paroi latérale peut être une pièce unique plane.

Les deux parois latérales, les deux parois longitudinales et la paroi supérieure peuvent délimiter le volume ouvert. Le bord inférieur de chacune des parois latérales et de chacune des parois longitudinales peuvent former une portion du bord inférieur de la cloche délimitant le volume. La présence des parois latérales peut permettre la fermeture du volume et donc de protéger du gel, du froid et de l'humidité.

Chaque paroi latérale comporte une forme sensiblement triangulaire de sorte que les parois longitudinales puissent être inclinées l'une par rapport à l'autre. Dans ce mode de réalisation, les parois longitudinales peuvent être planes. Les parois longitudinales sont inclinées de manière qu'elles convergent vers la paroi supérieure, ainsi les bords inférieurs des deux parois longitudinale sont éloignés l'une de l'autre par une distance supérieure à une distance séparant les deux bords reliés à la paroi supérieure. L'inclinaison des parois longitudinales peut permettre à la pluie de mieux ruisseler.

Dans un autre mode de réalisation, les parois longitudinales peuvent être incurvées, notamment concaves. Dans un autre mode de réalisation, les parois longitudinales peuvent être incurvées, notamment convexes.

Dans un mode de réalisation particulier, la cloche peut comporter une paroi longitudinale unique s'évasant vers le bord inférieur depuis la paroi supérieure, dans ce mode de réalisation, seul le bord inférieur de la paroi longitudinale unique peut former le bord inférieure délimitant la face inférieure ouverte.

Dans un autre mode de réalisation, chaque paroi latérale peut comporter deux portions formant entre elles un angle.

Chaque encoche ménagée dans le bord inférieur comporte une forme de pyramide tronquée. La base de la pyramide est confondue avec la face inférieure ouverte, les côtés de la pyramide sont parallèles aux parois longitudinales et la troncature est sensiblement parallèle à la face supérieure. La forme et les dimensions de l'encoche peuvent être adaptées à l'aste du cep de vigne.

Avantageusement, la cloche est réalisée en plastique.

Avantageusement, la cloche comporte un revêtement en liège.

La cloche peut être fabriquée dans un matériau translucide ou transparent sur tout ou partie de sa surface et pouvant permettre de laisser la lumière du soleil traverser de manière indirecte. Ainsi, les bourgeons placés sous la cloche peuvent continuer de recevoir la lumière du soleil pour pouvoir favoriser leur croissance tout en les protégeant d'une projection directe.

Dans un autre mode de réalisation, la cloche peut être fabriquée dans un matériau opaque. Dans ce cas, le matériau opaque peut préférentiellement être réfléchissant ou diffusant, par exemple de couleur blanche.

Dans un autre mode de réalisation, la cloche est formée par une superposition d'au moins deux couches, notamment de formes identiques, les couches étant superposées deux à deux sans jeu ou espace entre elles, notamment en étant collées. Ce mode de réalisation peut permettre de conserver une température adaptée aux bourgeons dans le volume défini par la cloche.

La cloche peut être en plastique, moulée en une seule pièce. Ainsi, la cloche peut être réalisée partiellement ou complètement en plastique. Alternativement, la cloche peut être réalisée en thermoplastique ou en composite ou en bi-matière, par exemple en plastique et/ou en liège.

L'utilisation du liège peut permettre de contrer l'humidité présente sous la cloche, par exemple la rosée se formant pendant la nuit.

La liège peut être un élément monobloc rapporté sur les parois longitudinales et/ou les parois latérales.

Dans un autre mode de réalisation, le liège peut être ajouté par projection sur le thermoplastique formant la cloche. Dans le mode de réalisation dans lequel, la cloche est translucide, le revêtement en liège peut recouvrir partiellement la cloche de manière à définir une fenêtre dans le liège projeté pour la visualisation des bourgeons. Le liège peut être à l'intérieur ou à l'extérieur de la cloche.

Dans un autre mode de réalisation ; une découpe peut être réalisée dans la cloche pour former la fenêtre.

Avantageusement, le dispositif comporte un dissipateur de chaleur agencé à l'intérieur de la cloche.

Par exemple, le dissipateur de chaleur peut être monté sur une face inférieure de la paroi supérieure. Le dissipateur de chaleur peut comporter des collecteurs comportant un cône de diffusion.

La dissipateur de chaleur peut être fabriqué par impression 3D (trois dimensions) et comporter une peinture réfléchissante.

L'utilisation de dissipateurs de chaleur peut permettre de réchauffer l'air contenu dans le volume et ainsi pouvoir éviter la transformation de la rosée en glace et donc le gel des bourgeons.

Avantageusement, le dissipateur de chaleur comporte une lampe halogène.

Le dispositif peut avantageusement comporter quatre lampes halogène. Chaque lampe peut comporter un collecteur ou un réflecteur agencé pour réfléchir la lumière ainsi que la chaleur émise par ladite lampe, en direction des bourgeons. Chaque collecteur ou réflecteur peut être elliptique. En variante, chaque collecteur ou réflecteur peut être parabolique.

Dans une variante de réalisation, le dissipateur de chaleur peut comporter une lampe à ultraviolet.

Dans une autre variante de réalisation, le dissipateur de chaleur peut comporter une résistance.

Avantageusement, le dispositif comporter une unité de contrôle apte à contrôler le dissipateur de chaleur et un capteur apte à recevoir une information météorologique locale, l'unité de contrôle étant agencée pour contrôler le dissipateur de chaleur en fonction de ladite information météorologique locale reçue.

Le capteur de l'unité de contrôle peut être un capteur de pluie, un capteur de luminosité, un capteur de température de l'air ambiant ou un récepteur apte à recevoir des informations d'une station météo ou d'un service de collecte de données météorologiques.

L'unité de contrôle peut être agencée pour activer automatiquement le dissipateur de chaleur lorsque la température descend au-dessous d'une valeur de température seuil et pour désactiver automatiquement le dissipateur de chaleur lorsque la température monte au-dessus d'une valeur de température seuil défini. L'unité de contrôle peut être agencée pour contrôler la quantité de chaleur dissipée par le dissipateur de chaleur.

Ainsi l'utilisation d'une unité de contrôle du dissipateur de chaleur peut permettre de maintenir une température définie sous la cloche, de sorte qu'une couche de glace ne puisse pas se former sur le bourgeon.

Dans un mode de réalisation, le dispositif peut être dépourvu de dissipateur de chaleur.

Dans ce mode de réalisation, le dispositif peut être dépourvu de dissipateur de chaleur, c'est-à-dire que seule la cloche peut permettre de maintenir une température plus élevée que celle de l'air ambiant. La cloche peut ainsi former à elle seule une protection contre la chute de la température puisque le volume restreint contenu dans la cloche peut permettre de maintenir une température adaptée pour éviter le gel des bourgeons.

Avantageusement, le dispositif comporte un connecteur électrique adapté pour être relié à une source d'alimentation électrique et agencé pour transmettre une puissance électrique distribuée par ladite source au dissipateur de chaleur.

Le connecteur électrique peut être monté sur une paroi latérale de la cloche. La paroi latérale de la cloche peut comporter un perçage, le connecteur électrique pouvant être monté dans ce perçage. Le dissipateur de chaleur peut comporter un câble s'étendant dans la cloche depuis le connecteur électrique vers ledit dissipateur de chaleur.

Le cas échéant, le connecteur électrique peut être adapté pour transmettre une puissance électrique distribuée par ladite source à l'unité de contrôle. L'unité de contrôle peut comporter un câble s'étendant dans la cloche depuis le connecteur électrique vers ladite unité de contrôle.

Le connecteur électrique peut permettre d'ajouter une alimentation électrique au dispositif. Le connecteur peut permettre de faire la liaison entre l'alimentation électrique et l'unité de contrôle et/ou le dissipateur de chaleur.

Avantageusement, le dispositif de protection comporte ladite source d'alimentation électrique, ladite source d'alimentation électrique étant montée sur une face extérieure d'une paroi de la cloche.

La source d'alimentation électrique peut être monté sur une face extérieure de la paroi supérieure.

La source d'alimentation électrique peut être adapté pour alimenter le dissipateur de chaleur. La source d'alimentation électrique peut être adapté pour alimenter l'unité de contrôle du dissipateur de chaleur.

La source d'alimentation électrique peut être monté sur une face supérieure de la paroi supérieure.

Dans un autre mode de réalisation, la source d'alimentation peut être monté sur une face inférieure de la paroi supérieure.

Dans un autre mode de réalisation, la source d'alimentation électrique peut être montée sur l'une des parois latérales. Dans un mode de réalisation différent, la source d'alimentation électrique peut être montée sur une surface intérieure ou une surface extérieure de la paroi longitudinale.

Avantageusement, la source d'alimentation électrique comporte au moins un panneau photovoltaïque.

Le panneau photovoltaïque peut avantageusement être monté sur la face supérieure de la paroi supérieure. La panneau photovoltaïque peut être monté sur les parois longitudinales.

Dans le mode de réalisation dans lequel la paroi supérieure peut être convexe, le panneau photovoltaïque peut être monté au niveau de cette zone convexe.

Le panneau photovoltaïque peut être un panneau souple intégré dans une toile adapté pour recouvrir entièrement la surface de la cloche. Par exemple, des cellules solaires photovoltaïques, dont au moins la couche active peut être constituée de molécules organiques, peuvent être intégrées au sein d'un support souple. Dès lors, le panneau souple peut épouser la forme de la cloche et recouvrir intégralement ou partiellement ladite cloche. Avantageusement, le dispositif de protection peut comporter un câble d'alimentation électrique relié au connecteur et susceptible d'être raccordé à un réseau de distribution électrique.

La source d'alimentation électrique filaire peut être une batterie.

La batterie peut être montée sur la face inférieure de la paroi supérieure de manière à être protégée de la pluie.

Avantageusement, chaque encoche de la cloche comporte au moins un organe d'accroche à l'aste.

Les organes d'accroche peuvent comporter des dents adaptées pour maintenir le dispositif sur l'aste du cep de vigne.

Les organes d'accroche peuvent permettre au dispositif d'être positionné de sorte que le dissipateur de chaleur soit à une distance pouvant être comprise entre 5 et 7 cm des bourgeons.

### Brève description des figures.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :
[Fig. 1] représente schématiquement une vue en perspective d'une cloche selon un mode de réalisation de l'invention.
[Fig. 2] représente schématiquement une vue en perspective d'une cloche comportant un moyen d'alimentation électrique selon un mode de réalisation de l'invention.
[Fig. 3] représente schématiquement une vue de dessous d'une cloche selon un mode de réalisation de l'invention.
[Fig. 4] représente schématiquement une vue en perspective d'une cloche selon un mode de réalisation de l'invention.
[Fig. 5] représente schématiquement une vue en perspective d'une cloche selon un autre mode de réalisation de l'invention.
[Fig. 6] représente schématiquement une vue en perspective d'une cloche selon un mode de réalisation différent de l'invention.
[Fig. 7] représente schématiquement une vue d'ensemble d'un rang de cep de vignes comportant une pluralité de cloches selon plusieurs modes de réalisation.

Dans la description qui suit, les éléments identiques, par structure ou par fonction, apparaissant sur différentes figures conservent, sauf précision contraire, les mêmes références.

### Description des modes de réalisation.

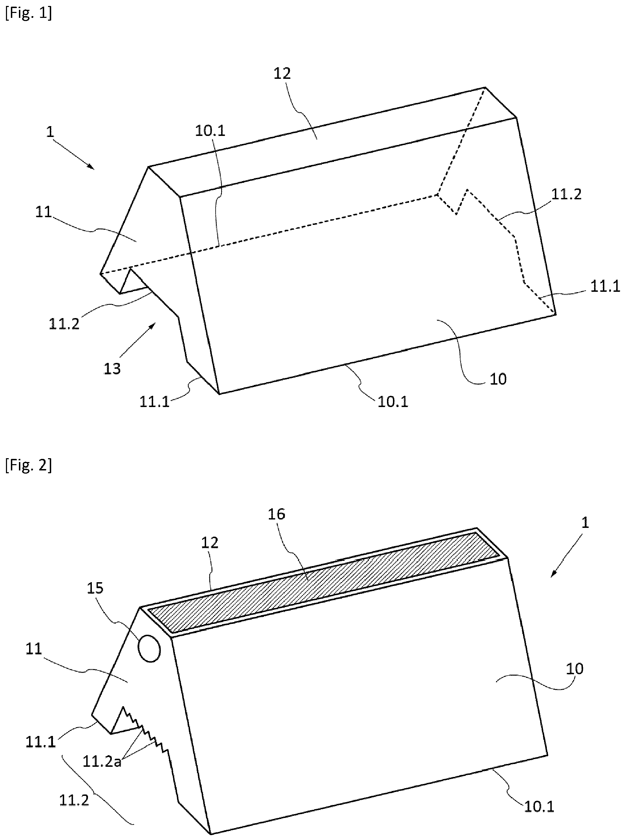

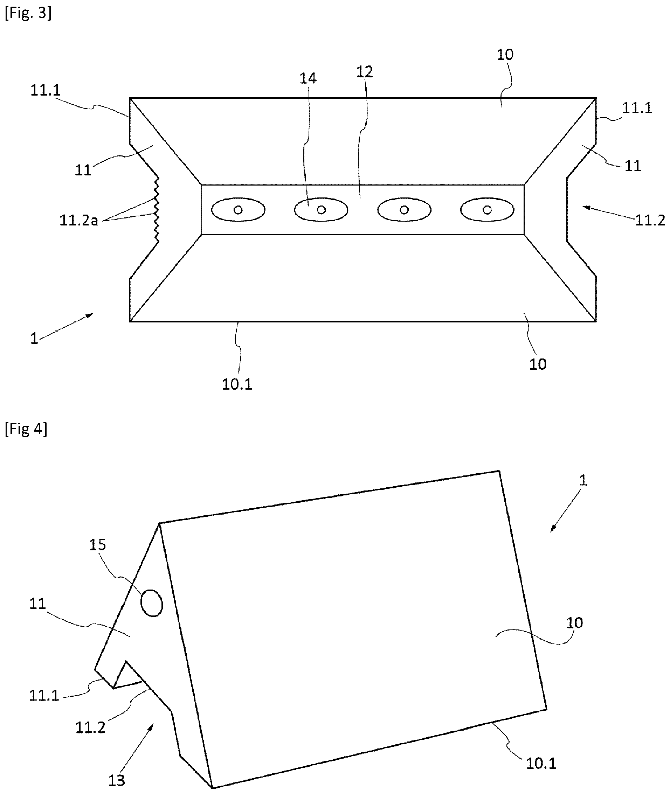

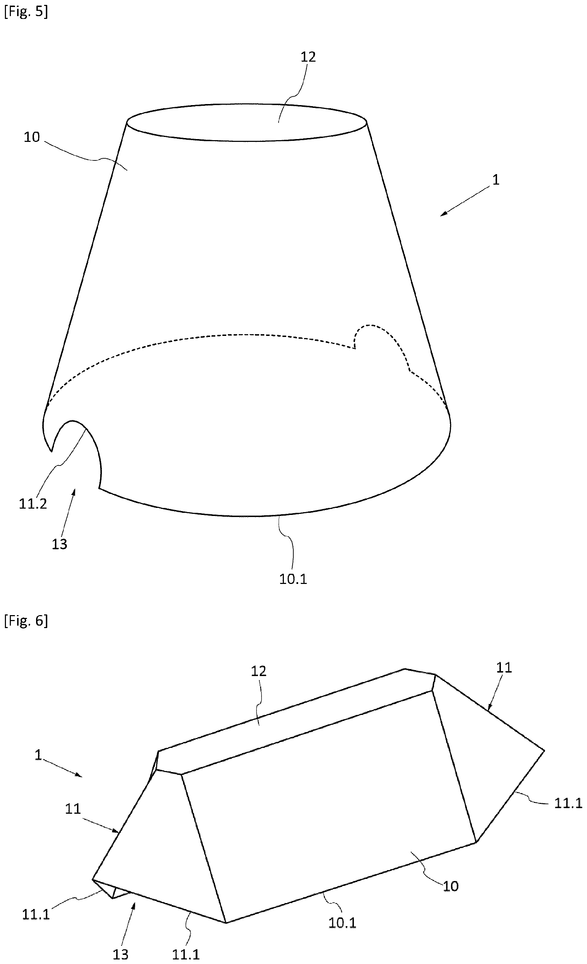

On a représenté en [Fig. 1] un dispositif de protection d'un cep de vigne selon un mode de réalisation de l'invention, décrit en lien avec la [Fig. 2] et la [Fig. 3]. Les [Fig. 4], [Fig. 5] et [Fig. 6] décrivent une pluralité de modes de réalisation d'une cloche du dispositif de protection décrit en [Fig. 1].

Le dispositif de protection 1 décrit en [Fig. 1] comporte une cloche 1. La cloche 1 est ouverte sur une face inférieure 13 délimitée par un bord inférieur 10.1, 11.1 de ladite cloche 1. La cloche 1 présente une forme s'évasant globalement vers ce bord inférieur 10.1, 11.1. La face inférieure 13 de la cloche 1 est ouverte.

La cloche 1 comporte deux parois longitudinales 10 reliées entre elles par deux parois latérales 11 et une paroi supérieure 12.

Les deux parois longitudinales 10 sont sensiblement planes. Chaque paroi longitudinale 10 comporte un bord inférieur 10.1 formant une portion du bord inférieur 10.1, 11.1 délimitant la face inférieure 13. Chaque paroi longitudinale 10 comporte un bord supérieur opposé au bord inférieur 10.1.

Chaque paroi latérale 11 comporte un bord inférieur 11.1 formant une portion du bord inférieur 10.1, 11.1 délimitant la face inférieure 13. Chaque paroi latérale 11 comporte un bord supérieur opposé au bord inférieur 11.1. Chaque paroi latérale 11 est une pièce sensiblement plane.

Chaque paroi latérale 11 relie deux bords opposés des parois longitudinales 10 en s'étendant sur tout le long et de manière continue de chacun de ces bords. La paroi supérieure 12 relie deux bords supérieurs opposés des parois longitudinales 10 en s'étendant sur tout le long et de manière continue de chacun de ces bords supérieurs. Dès lors, chaque paroi latérale 11 peut être insérée entre deux parois longitudinales 10 disposées de part et d'autre de ladite paroi latérale 11 et sous la paroi supérieure 12 disposée au niveau du bord supérieur de la paroi latérale 11.

Les parois latérales 11 comportent chacune une forme permettant aux parois longitudinales 10 d'être inclinées l'une par rapport à l'autre. Dès lors, les parois longitudinales 10 sont inclinées de manière à converger vers la paroi supérieure 12. Les bords inférieurs 10.1 des parois longitudinales 10 sont éloignées l'un de l'autre par une distance supérieure à une distance séparant les bords supérieurs des dites parois longitudinales 10. C'est l'inclinaison des parois longitudinales 10 qui permet de donner une forme évasée à la cloche 1.

Les parois longitudinales 10, les parois latérales 11 et la paroi supérieure 12 délimitent un volume ouvert au niveau de la face inférieure délimitée par le bord inférieur 10.1, 11.1 et adapté pour recevoir une portion du cep de vigne.

Chaque face latérale 11 comporte une encoche 11.2 ménagée dans le bord inférieur 10.1, 11.1, de sorte que la cloche 1 comporte deux encoches 11.2 se faisant face. Les encoches 11.2 sont adaptées pour recevoir une aste du cep de vigne.

Chaque encoche 11.2 ménagée dans le bord inférieur 10.1, 11.1 comporte une forme de pyramide tronquée. La base de la pyramide est confondue avec la face inférieure 13 ouverte, les côtés de la pyramide sont parallèles aux parois longitudinales 10 et la troncature est sensiblement parallèle à la face supérieure 12. La forme et les dimensions de l'encoche 11.2 sont adaptées à l'aste du cep de vigne.

Comme décrit en [Fig. 2] et en [Fig. 3], chaque encoche 11.2 comporte un organe de maintien 11.2a. L'organe de maintien 11.2a comporte des dents adaptées pour maintenir la cloche 1 sur l'aste du cep de vigne.

La [Fig. 2] décrit un autre mode de réalisation de la cloche 1. La [Fig. 2] est décrite en lien avec la [Fig. 3]. Dans ce mode de réalisation, la cloche 1 comporte une source d'alimentation électrique 16 et un dissipateur de chaleur 14.

Le dissipateur de chaleur 14 est agencé à l'intérieur de la cloche 1, sur une face inférieure de la paroi supérieure 12. Le dissipateur de chaleur 14 comporte quatre lampes halogène. Chaque lampe comporte un collecteur ou un réflecteur formant un cône de diffusion agencé pour réfléchir la lumière ainsi que la chaleur émise par ladite lampe, en direction des bourgeons et de l'aste. Chaque collecteur ou réflecteur est elliptique ou parabolique et comporte sur sa face interne une peinture réfléchissante pour augmenter la réflexion de la lumière et de la chaleur en direction de l'aste et des bourgeons. Le dissipateur de chaleur 14 est positionné à une distance comprise notamment entre 5 et 7 cm des bourgeons.

La source d'alimentation électrique 16 est montée une paroi de la cloche 1. La source d'alimentation électrique est montée sur une face extérieure de la paroi supérieure 12. Ainsi, le dissipateur de chaleur 14 et la source d'alimentation électrique 16 sont montés de part et d'autre de la paroi supérieure 12.

La source d'alimentation électrique 16 est adaptée pour alimenter le dissipateur de chaleur 14 décrit en [Fig. 3] grâce au connecteur électrique 15.

Le connecteur électrique 15 est monté sur une paroi latérale 11 de la cloche 1. La paroi latérale de la cloche peut comporter un perçage, le connecteur électrique pouvant être monté dans ce perçage. Le connecteur électrique 15 est adapté pour être relié à la source d'alimentation électrique 16 et agencé pour transmettre une puissance électrique distribuée par ladite source 16 au dissipateur de chaleur 14. Le dissipateur de chaleur 14 comporte un câble s'étendant dans la cloche 1 depuis le connecteur électrique 15 vers ledit dissipateur de chaleur 14.

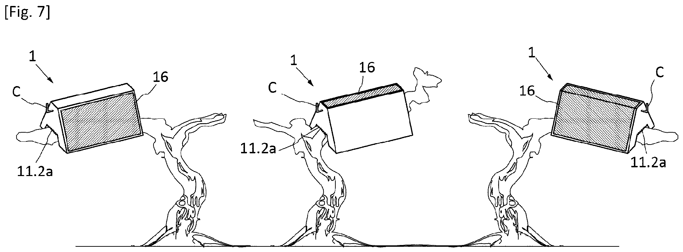

Le dispositif 1 comporte une unité de contrôle (non représentée) apte à contrôler le dissipateur de chaleur 14 et un capteur C décrit en [Fig. 7]. Ledit capteur C est apte à recevoir une information météorologique locale, l'unité de contrôle étant agencée pour contrôler le dissipateur de chaleur 14 en fonction de ladite information météorologique locale reçue. Le capteur C comporte un capteur de pluie, un capteur de luminosité, un capteur de température de l'air ambiant et/ou un récepteur apte à recevoir des informations d'une station météo ou d'un service de collecte de données météorologiques.

L'unité de contrôle est agencée pour activer automatiquement le dissipateur de chaleur 14 lorsque la température descends au-dessous d'une valeur de température seuil et pour désactiver automatiquement le dissipateur de chaleur 14 lorsque la température monte au-dessus d'une valeur de température seuil défini. L'unité de contrôle est agencée pour contrôler la quantité de chaleur dissipée par le dissipateur de chaleur 14.

L'unité de contrôle est branchée sur le connecteur électrique 15 de sorte que ledit connecteur électrique 15 fasse la liaison entre la source d'alimentation électrique 16 et ladite unité de contrôle.

Le connecteur électrique 15 est adapté pour transmettre une puissance électrique distribuée par ladite source 16 à l'unité de contrôle. L'unité de contrôle comporte un câble s'étendant dans la cloche 1 depuis le connecteur électrique 15 vers ladite unité de contrôle.

La [Fig. 4] décrit un autre mode de réalisation de la cloche 1. Dans ce mode de réalisation, les deux parois longitudinales 10 sont reliées entre elles par deux parois latérales 11. Les deux parois longitudinales 10 sont sensiblement planes. Chaque paroi latérale 11 relie deux bords opposés des parois longitudinales 10 en s'étendant sur tout le long et de manière continue de chacun de ces bords.

Les deux bords supérieurs opposés des deux parois longitudinales 10 sont reliés entre eux surtout le long et de manière continue. Dès lors, chaque paroi latérale 11 peut être insérée entre deux parois longitudinales 10 disposées de part et d'autre de ladite paroi latérale 11.

Les parois latérales 11 comportent chacune une forme permettant aux parois longitudinales 10 d'être inclinées l'une par rapport à l'autre. Dès lors, les parois longitudinales 10 sont inclinées de manière que chacun de leur bord supérieur converge l'un vers l'autre. Les bords inférieurs 10.1 des parois longitudinales 10 sont éloignées l'un de l'autre et les bords supérieurs des parois longitudinales 10 sont confondus.

La [Fig. 5] décrit un autre mode de réalisation de la cloche 1. Dans ce mode de réalisation, La cloche 1 comporte une paroi longitudinale 10 unique surmontée par une paroi supérieure 12. La paroi longitudinale 10 comporte un bord inférieur 10.1 formant le bord inférieur de la cloche 1 et délimitant la face inférieure 13.

La [Fig. 5] décrit un autre mode de réalisation de la cloche 1. Dans ce mode de réalisation, la cloche comporte une paroi longitudinale 10 unique s'évasant vers le bord inférieur 10.1, depuis la paroi supérieure 12. La cloche 1 a une forme de cône tronqué, la troncature correspondant à ladite paroi supérieure 12.

Le bord inférieur 10.1 est le seul à former le bord inférieur délimitant la face inférieure 13 ouverte. Ainsi, les deux encoches 11.2 sont découpées dans le même bord inférieur 10.1 tout en se faisant face.

La [Fig. 6] décrit un autre mode de réalisation de la cloche 1. Dans ce mode de réalisation, les deux parois longitudinales 10 sont reliées ensemble par deux parois latérales 11. Les deux parois longitudinales 10 sont sensiblement planes. Chaque paroi latérale 11 comporte deux portions formant un angle entre elles. Les deux portions de chaque paroi latérale 11 sont agencées pour former une encoche adaptée pour recevoir un aste du cep de vigne.

La [Fig. 7] décrit un rang comportant une pluralité de ceps de vignes sur lesquels sont installés des dispositifs de protection 1. Les dispositifs de protection sont réalisés selon plusieurs modes de réalisation. Chaque dispositif de protection comporte un capteur C monté sur l'une des parois latérales 11. Le capteur C est apte à recevoir une information météorologique locale et à la restituer à l'unité de contrôle agencée pour contrôler le dissipateur de chaleur 14. L'un des dispositifs comporte une source d'alimentation 16 montée sur l'une des parois longitudinales 10. L'un des dispositifs comporte une source d'alimentation 16 montée sur la paroi supérieure 12. L'un des dispositifs comporte une source d'alimentation 16 sous la forme d'un panneau souple intégré dans une toile et adapté pour recouvrir la surface de la cloche 1 en épousant la forme de la cloche 1

La description qui précède explique clairement comment l'invention permet d'atteindre les objectifs qu'elle s'est fixée, à savoir proposer un dispositif permettant la protection des bourgeons et/ou des fruits vis-à-vis de la formation des rayons lumineux du soleil levant, du vent et de la transformation de la rosée en fine couche de glace, en proposant un dispositif de protection d'un cep de vigne comportant une cloche ouverte sur une face délimitée par un bord inférieur de la cloche et présentant une forme s'évasant globalement vers ce bord inférieur, la cloche comportant deux encoches ménagées dans ledit bord inférieur, les encoches se faisant face en étant adaptées pour recevoir une aste du cep de vigne.

En tout état de cause, l'invention ne saurait se limiter aux modes de réalisation spécifiquement décrits dans ce document, et s'étend en particulier à tous moyens équivalents et à toute combinaison techniquement opérante de ces moyens. On pourra en particulier envisager :
- les parois longitudinales 10 peuvent être incurvées, notamment concaves ;
- les parois longitudinales 10 peuvent être incurvées, notamment convexes ;
- la cloche 1 peut comporter une paroi longitudinale 10 unique s'évasant vers le bord inférieur 10.1 depuis la paroi supérieure 12 ;
- seul le bord inférieur 10.1 de la paroi longitudinale 10 unique peut former le bord inférieur délimitant la face inférieure 13 ouverte ;
- chaque paroi latérale 11 peut comporter deux portions formant entre elles un angle ;
- le dispositif 1 peut être dépourvu de dissipateur de chaleur ;
- le dissipateur de chaleur 14 peut comporter une lampe à ultraviolet ;
- le dissipateur de chaleur 14 peut comporter une résistance ;
- la source d'alimentation électrique 16 peut être montée sur l'une des parois latérales 11 ;
- la source d'alimentation électrique 16 peut être montée sur une surface intérieure ou une surface extérieure de la paroi longitudinale 10 ;
- le dispositif 1 peut être dépourvu de dissipateur de chaleur 14 ;
- la source d'alimentation électrique 16 est une alimentation électrique filaire ;
- le dispositif de protection 1 peut comporter un câble d'alimentation électrique relié au connecteur 15 et susceptible d'être raccordé à un réseau de distribution électrique ;
- la source d'alimentation électrique 16 peut être une batterie ;
- la source d'alimentation électrique 16 peut être montée sur l'une des parois latérales11 ;
- le panneau photovoltaïque 16 peut être monté sur les parois longitudinales 12 ;
- le panneau photovoltaïque 16 peut être un panneau souple intégré dans une toile adapté pour recouvrir entièrement la surface de la cloche 1, le panneau photovoltaïque souple peut épouser la forme de la cloche 1 et recouvrir intégralement ou partiellement ladite cloche 1.

## Revendications

1. Dispositif de protection (1) d'un cep de vigne comportant une cloche (1) ouverte sur une face (13) délimitée par un bord inférieur (10.1, 11.1) de la cloche (1) et présentant une forme s'évasant globalement vers ce bord inférieur (10.1, 11.1), la cloche (1) comportant deux encoches (11.2) ménagées dans ledit bord inférieur (10.1, 11.1), les encoches (11.2) se faisant face en étant adaptées pour recevoir une aste du cep de vigne.

2. Dispositif de protection (1) selon la revendication précédente **caractérisé en ce que** la cloche (1) comporte deux parois longitudinales (10) reliées entre elles par deux parois latérales (11) et une paroi supérieure (12), la cloche (1) étant ouverte au niveau de sa face inférieure (13), **caractérisé en ce que** :
- Chacune des parois latérales (11) et de la paroi supérieure (12) relie deux bords opposés des parois longitudinales (10) en s'étendant sur tout le long de chacun de ces bords ;
- Les parois latérales (11) sont agencées de sorte que les parois longitudinales (10) soient inclinées l'une par rapport à l'autre en convergeant vers la paroi supérieure (12) ;
- Chaque paroi latérale (11) comporte une encoche (11.2) ménagée dans son bord inférieur (11.1), ladite encoche (11.2) étant adaptée pour recevoir une aste du cep de vigne.

3. Dispositif de protection (1) selon l'une des revendications 1 ou 2, **caractérisé en ce que** la cloche (1) est réalisée en plastique.

4. Dispositif de protection selon la revendication précédente, **caractérisée en ce que** la cloche (1) comporte un revêtement en liège.

5. Dispositif de protection (1) selon l'une des revendications 1 à 4, **caractérisé en ce qu'**il comporte un dissipateur de chaleur (14) agencé à l'intérieur de la cloche.

6. Dispositif de protection (1) selon la revendication 5, **caractérisé en ce que** le dissipateur de chaleur (14) comporte une lampe halogène.

7. Dispositif de protection (1) selon l'une des revendications 5 ou 6, **caractérisé en ce qu'**il comporte une unité de contrôle apte à contrôler le dissipateur de chaleur et un capteur (C) apte à recevoir une information météorologique locale, l'unité de contrôle étant agencée pour contrôler le dissipateur de chaleur en fonction de ladite information météorologique locale reçue.

8. Dispositif de protection (1) selon l'une des revendications précédentes, **caractérisé en ce qu'**il comporte un connecteur électrique (15), adapté pour être relié à une source d'alimentation électrique (16) et agencé pour transmettre une puissance électrique distribuée par ladite source au dissipateur de chaleur.

9. Dispositif de protection (1) selon la revendication 8, **caractérisé en ce qu'**il comporte ladite source d'alimentation électrique, ladite source d'alimentation électrique (16) étant montée sur une face extérieure d'une paroi de la cloche (1).

10. Dispositif de protection (1) selon l'une des revendications 8 ou 9, **caractérisé en ce que** ladite source d'alimentation électrique (16) comporte au moins un panneau photovoltaïque.

11. Dispositif de protection (1) selon l'une des revendications précédentes, **caractérisé en ce que** chaque encoche (11.2) de la cloche comporte au moins un organe d'accroche à l'aste (11.2a).
